# EUROPÄISCHE PATENTSCHRIFT

(11) **EP 1 768 880 B1**
(45) Veröffentlichungstag und Bekanntmachung des Hinweises auf die Patenterteilung: **29.09.2010**
(21) Anmeldenummer: 05768052.2
(22) Anmeldetag: 20.07.2005
(51) Int. Cl.: B60T 7/12, B60T 8/00

(54) **VERFAHREN ZUR STEUERUNG EINER FAHRZEUGBREMSE MIT EINER BREMSBEREITSCHAFTSFUNKTION**
METHOD FOR CONTROLLING A VEHICLE BRAKE WITH A BRAKE STAND-BY FUNCTION
PROCEDE DE COMMANDE D'UN FREIN DE VEHICULE, A FONCTION DE RESERVE

(30) Priorität: 21.07.2004 DE 102004035378
(43) Veröffentlichungstag der Anmeldung: 04.04.2007
(73) Patentinhaber: Continental Teves AG & Co. oHG, 60488 Frankfurt am Main (DE)
(72) Erfinder: GROITZSCH, Stephan, 69469 Weinheim (DE); CRESS, Torsten, 36381 Schlüchtern (DE)
(86) Internationale Anmeldenummer: PCT/EP2005/053524
(87) Internationale Veröffentlichungsnummer: WO 2006/008309

(56) Entgegenhaltungen:
- DE-A1- 10 148 534
- DE-A1- 19 629 229
- DE-A1- 19 912 878

## Beschreibung

Die Erfindung betrifft ein Verfahren zur Steuerung einer Fahrzeugbremsanlage mit einer Bremsbereitschaftsfunktion.

Es ist bekannt, das Bremsensystem eines Fahrzeugs mit einer Bremsbereitschaftsfunktion auszustatten, bei der in einer Notbremssituation bereits bevor der Fahrer das Bremspedal betätigt ein Bremsdruck in den Radbremsen der Fahrzeugbremsanlage aufgebaut wird, so dass sich die Bremsbeläge oder Bremsbacken an die Bremsscheiben bzw. Bremstrommeln anlegen.

Dabei wird zwar noch keine nennenswerte Bremswirkung erzielt, aber die Ansprechzeit der Bremse wird verkürzt, weil das Lüftspiel der Bremsbeläge oder Bremsbacken schon vor dem Betätigen des Bremspedals überwunden ist. Die Bremsbereitschaftsfunktion trägt somit zu einer Verkürzung des Bremswegs bei einer Notbremsung bei und erhöht auf diese Weise die Fahrzeugsicherheit.

Ferner ist unter der Bezeichnung Bremsassistent eine Funktion bekannt, bei der in einer Notbremssituation ein größerer Bremsdruck in der Bremsanlage aufgebaut wird, als es der Stellung des Bremspedals entspricht. Auf diese Weise wird in einer Notbremssituation auch dann die maximale Bremswirkung erzielt, wenn der Fahrer das Bremspedal nicht stark genug eintritt.

Aus der deutschen Offenlegungsschrift DE 196 29 229 A1 ist ein Verfahren zur Durchführung eines automatischen Bremsvorgangs bekannt, bei dem die Bremsbereitschaftsfunktion mit einem Bremsassistenten kombiniert wird. Dabei wird zunächst die Bremsbereitschaftsfunktion ausgelöst, wenn die Gaspedalrücknahmegeschwindigkeit einen vorgegebenen festen Schwellenwert überschreitet. Überschreitet bei einer nachfolgenden Betätigung des Bremspedals die Betätigungsgeschwindigkeit einen Anstiegsschwellenwert, so wird ein hoher Bremsdruck in der Bremsanlage erzeugt. Ist dies nicht der Fall, wird der automatische Bremsvorgang nach Ablauf einer vorgegebenen Zeitdauer beendet.

Somit wird die Bremsbereitschaftsfunktion bei dem bekannten Verfahren wenigstens während einer vorgegebenen Zeitdauer aufrechterhalten.

Mit der Bremsbereitschaftsfunktion ist jedoch für den Fahrer ein verändertes Pedalgefühl bei der Betätigung des Bremspedals verbunden, da der bereits vor der Betätigung des Bremspedals aufgebaute Bremsdruck einen erhöhten Pedalwiderstand zur Folge hat, der von dem Fahrer überwunden werden muss. Insbesondere bei einer Fehlauslösung der Bremsbereitschaftsfunktion, d.h. bei einem Auslösen in einer unkritischen Fahrsituation, wird dies von dem Fahrer in der Regel als eine Komforteinbuße bei der Bedienung des Bremspedals wahrgenommen.

Es ist daher eine Aufgabe der vorliegenden Erfindung, ein Verfahren zur Steuerung eines Bremssystems mit Bremsbereitschaftsfunktion so zu verbessern, dass der genannte Nachteil für den Fahrer nicht mehr in Erscheinung tritt, und der Komfort bei der Bedienung des Bremspedals erhöht wird.

Diese Aufgabe wird durch ein Verfahren zur Steuerung einer Fahrzeugbremsanlage mit Bremsassistent nach Anspruch 1 gelöst. Erfindungsgemäß weist der Bremsassistent eine Bremsbereitschaftsfunktion auf, bei der ein Verdacht auf eine Notbremssituation ermittelt wird und beim Erkennen eines Verdachts einer Notbremssituation ein Bremsdruck in der Fahrzeugbremsanlage erzeugt wird. Die Erfindung zeichnet sich dadurch aus, dass die Bremsbereitschaftsfunktion abgebrochen wird, wenn der Fahrer das Bremspedal betätigt.

Ein Vorteil des erfindungsgemäßen Verfahrens ist, dass der Komfort für den Fahrer beim Bremsen erhöht wird, weil die Bremsbereitschaftsfunktion keinen bzw. nur einen sehr kurzzeitigen Einfluss auf das Pedalgefühl für den Fahrer hat.

Bei einer Weiterbildung der Erfindung, bei der ein Bremssystem mit einer hydraulischen Pumpe zum Einsatz kommt, die zum Anlegen der Bremsbacken bzw. Bremsbeläge an den Bremsscheiben bzw. Bremstrommeln angesteuert wird, wird bei einem Abbruch der Bremsbereitschaftsfunktion die hydraulische Pumpe bzw. deren Antriebsmotor wieder abgeschaltet.

Somit tritt der Fahrer bei Betätigung des Bremspedals nicht gegen den von der laufenden Pumpe erzeugten Druck an. In diesem Fall unterscheidet sich das Pedalgefühl für den Fahrer nicht von einem normalen Bremsvorgang, bei dem die Bremsbereitschaftsfunktion nicht aktiviert worden ist.

In einer vorteilhaften Ausführungsform der Erfindung ist es vorgesehen, dass eine Betätigung des Bremspedals durch den Fahrer mittels eines Pedalwegsensors festgestellt wird.

In einer ebenfalls vorteilhaften Ausführungsform der Erfindung wird eine Betätigung des Bremspedals durch den Fahrer festgestellt, wenn sich der Bremsdruck bei aktivierter Bremsbereitschaftsfunktion um wenigstens einen vorgegebenen Schwellenwert erhöht.

In einer weiteren vorteilhaften Ausführungsform der Erfindung ist es ferner vorgesehen, dass eine Betätigung des Bremspedals durch den Fahrer festgestellt wird, wenn der Gradient des Bremsdrucks bei aktivierter Bremsbereitschaftsfunktion einen vorgegebenen Schwellenwert überschreitet.

Diese Ausführungsform hat den Vorteil, dass ein Einbremsen des Fahrers anhand des Bremsdruckgradienten besonders schnell erkannt werden kann.

Die Erfindung wird nunmehr anhand eines Ausführungsbeispieles im Einzelnen erläutert. Zum besseren Verständnis der Erfindung sind in der Zeichnung eine Vorrichtung zur Ausführung des erfindungsgemäßen Verfahrens sowie einige wesentliche funktionelle Zusammenhänge dargestellt.

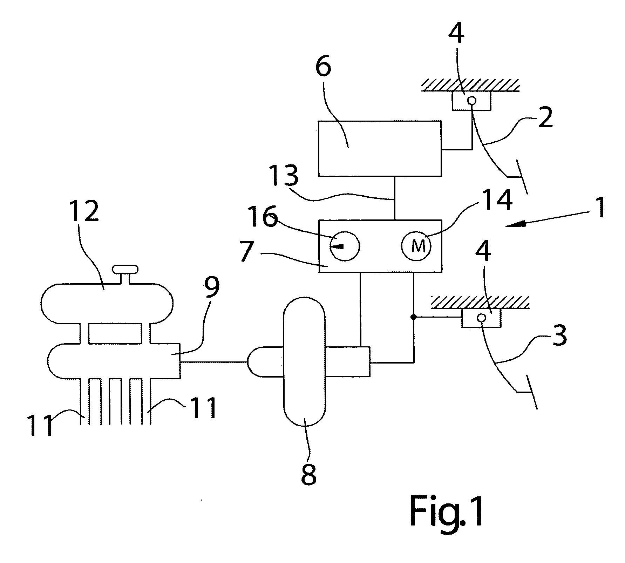

Fig. 1 zeigt eine schematische Darstellung einer Vorrichtung zur Durchführung des erfindungsgemäßen Verfahrens.

Die in der Fig. 1 dargestellte Vorrichtung wird als Ganzes mit dem Bezugszeichen 1 bezeichnet. Die Vorrichtung umfasst ein Fahrpedal 2 sowie ein Bremspedal 3. Die Verstellwege sowie die Verstellgeschwindigkeiten des Fahrpedals 2 und vorzugsweise auch des Bremspedals 3 werden von zugeordneten Sensoren 4 erfasst.

Mit dem Fahrpedal 2 werden auf elektrischem Wege Fahrbefehle an eine Motorsteuerung 6 übermittelt, die entsprechend der Fahrbefehle ein Drehmoment von einem Motor anfordert. Eine solche Motorsteuerung ist im Stand der Technik z.B. unter dem Schlagwort "Drive-by-Wire" bekannt und wird deshalb an dieser Stelle nicht weiter beschrieben.

Mit dem Bremspedal 3 werden Bremsbefehle an eine elektrohydraulische Steuereinheit 7 übermittelt, die entsprechend der Bremsbefehle des Fahrers für einen entsprechenden Bremsdruck in den Radbremsen des Fahrzeugs sorgt. Die elektrohydraulische Steuereinheit 7 ist ebenfalls im Stand der Technik als eine Komponente von so genannten "Brake-by-Wire" Bremssystemen bekannt.

Die elektrohydraulische Einheit 7 ist mit einem Bremskraftverstärker 8 signalmäßig verbunden. Gleichzeitig ist der Bremskraftverstärker auch mechanisch mit dem Bremspedal 3 verbunden. Der Bremskraftverstärker 8 überträgt eine mechanische Bewegung auf einen Hauptbremszylinder 9, in welchem ein hydraulischer Druck erzeugt wird, der über Bremsleitungen 11 in die Radbremsen übertragen wird, die in Fig. 1 nicht dargestellt sind. Mit dem Hauptbremszylinder 9 ist darüber hinaus ein Vorratsbehälter 12 für Bremsflüssigkeit strömungsmäßig verbunden. Ferner sind der Hauptbremszylinder 9 und/oder die Bremszylinder der Radbremsen in einer vorteilhaften Ausgestaltung der Erfindung mit einem in der Figur 2 nicht dargestellten Drucksensor ausgerüstet.

Schließlich ist zwischen der Motorsteuerung 6 und der elektrohydraulischen Einheit 7 eine signalmäßige Verbindung 13 vorgesehen, welche die Übertragung eines Signals ermöglicht, das die Bremsbereitschaftsfunktion auslöst.

Die elektrohydraulische Einheit 7 weist eine von einem Motor 14 angetriebene Pumpe 16 auf, die es gestattet, einen Bremsdruck zu erzeugen, ohne dass der Fahrer das Bremspedal 3 betätigt. Wenn die Bremsbereitschaftsfunktion von der elektrohydraulischen Einheit 7 ausgelöst wird, dann schaltet sich der Motor 14 ein und treibt die Pumpe 16 an, um einen ausreichenden Bremsdruck zu erzeugen, damit sich die Bremsbeläge oder Bremsbacken in den Radbremsen anlegen.

Zur Aktivierung der Bremsbereitschaftsfunktion wird die Rücknahmegeschwindigkeit des Fahrpedals von der elektrohydraulischen Einheit 7 überwacht. Überschreitet die Rücknahmegeschwindigkeit einen vorgegebenen Schwellenwert, so wird davon ausgegangen, dass eine Notbremssituation vorliegt, und die Bremsbereitschaftsfunktion wird ausgelöst, das heißt, in den Radbremsen wird ein geringer Bremsdruck erzeugt, um das Lüftspiel von Bremsbelägen bzw. Bremsbacken zu beseitigen.

Um den Fahrer bei einem Bremsvorgang nicht mit einem aus dem normalen Fahrzeugbetrieb unbekannten bzw. ungewohnten Bremsgefühl zu irritieren, ist es vorgesehen, dass der Motor 14 sofort abgeschaltet wird, sobald der Fahrer das Bremspedal 3 betätigt. Auf diese Weise wird erreicht, dass auf der einen Seite ein schnelleres Ansprechen der Bremse erreicht wird, während der Fahrer aber nicht gegen einen bereits im Bremssystem herrschenden Bremsdruck "tritt".

Die Betätigung des Bremspedals 3 durch den Fahrer wird dabei in einer Ausführungsform der Erfindung anhand der Signale des dem Bremspedal 3 zugeordneten Pedalwegsensors 4 erfasst.

In einer weiteren Ausführungsform der Erfindung ist es vorgesehen, den Bremsdruck innerhalb des Hauptbremszylinders 9 und/oder innerhalb der Bremszylinder der Radbremsen mittels des Drucksensors zu überwachen, um ein Einbremsen des Fahrers zu erkennen. Falls dabei bei aktivierter Bremsbereitschaftsfunktion, d.h. bei Vorliegen des durch die Bremsbereitschaftsfunktion aufgebauten Bremsdrucks, eine Erhöhung des Bremsdrucks um wenigstens einen vorgegebenen Schwellenwert ermittelt wird, wird eine Betätigung des Bremspedals 3 festgestellt und die Bremsbereitschaftsfunktion wird abgebrochen.

Ferner kann es vorgesehen sein, den Bremsdruckgradienten innerhalb des Hauptbremszylinders 9 und/oder innerhalb der Bremszylinder der Radbremsen zu überwachen, und eine Bremsenbetätigung des Fahrers dann festzustellen, wenn der Bremsdruckgradient bei aktivierter Bremsbereitschaftsfunktion einen vorgegebenen Schwellenwert überschreitet. Auf diese Weise kann ein Einbremsen des Fahrers besonders schnell erkannt werden.

Die erfindungsgemäß ausgestaltete Bremsbereitschaftsfunktion kann sowohl in Kombination mit einem Bremsassistenten eingesetzt werden, wie grundsätzlich beispielsweise aus der wie er grundsätzlich aus der deutschen Offenlegungsschrift DE 196 29 229 A1 bekannt ist. Es ist jedoch ebenfalls möglich, die Bremsbereitschaftsfunktion ohne einen Bremsassistenten zu realisieren.

Bei einer Kombination der Bremsbereitschaftsfunktion mit einem Bremsassistenten ist es vorgesehen, dass die Pumpe 16 bzw. der Motor 14 nach dem Beenden der Bremsbereitschaftsfunktion erneut angeschaltet wird, wenn eine Aktivierungsbedingung für den Bremsassistenten erfüllt ist.

Vorzugsweise wird der Bremsassistent dabei aktiviert, wenn bei der Betätigung des Bremspedals durch den Fahrer der Bremsdruck innerhalb des Hauptbremszylinders 9 einen vorgegebenen Schwellenwert überschreitet und/oder wenn der Bremsdruckgradient innerhalb des Hauptbremszylinders 9 einen vorgegebenen Schwellenwert überschreitet. Dabei werden vorzugsweise andere, insbesondere größere Schwellenwerte vorgegeben, als diejenigen, die für den Abbruch der Bremsbereitschaftsfunktion maßgeblich sind.

Somit erfolgt bei einer Kombination der Bremsbereitschaftsfunktion mit einem Bremsassistenten zunächst ein Abbruch der Bremsbereitschaftsfunktion, wenn der Bremsdruck und/oder der Bremsdruckgradient innerhalb des Hauptbremszylinders 9 einen ersten Schwellenwert überschreitet, wobei die Pumpe 16 bzw. der Motor 14 ausgeschaltet wird. Überschreitet der Bremsdruck und/oder der Bremsdruckgradient innerhalb des Hauptbremszylinders 9 nachfolgend einen zweiten, größeren Schwellenwert, wird der Bremsassistent aktiviert, wobei die Pumpe 16 bzw. der Motor 14 erneut angeschaltet werden.

Weiterhin ist es im Rahmen der vorliegenden Erfindung vorgesehen, dass die Bremsbereitschaftsfunktion nach einer vorgegeben Zeitdauer abgebrochen wird, wenn bei aktivierter Bremsbereitschaftsfunktion eine Betätigung des Bremspedals 3 unterbleibt, wie es beispielsweise bei Schaltvorgängen der Fall sein kann, bei denen die Bremsbereitschaftsfunktion aufgrund einer besonders hohen Gaspedalrücknahmegeschwindigkeit ausgelöst wird. Insgesamt ist es somit vorgesehen, dass die Bremsbereitschaftsfunktion abgebrochen wird, wenn eine mit der Aktivierung beginnende vorgegebene Zeitdauer abgelaufen ist oder wenn während dieser Zeitdauer eine Betätigung des Bremspedals 3 festgestellt wird.

## Patentansprüche

1. Verfahren zur Steuerung einer Fahrzeugbremsanlage mit einer Bremsbereitschaftsfunktion, bei der ein Verdacht auf eine Notbremssituation ermittelt wird und beim Erkennen eines Verdachts einer Notbremssituation ein Bremsdruck in der Fahrzeugbremsanlage erzeugt wird,
**dadurch gekennzeichnet,**
**dass** die Bremsbereitschaftsfunktion abgebrochen wird, wenn der Fahrer das Bremspedal (3) betätigt.

2. Verfahren nach Anspruch 1,
**dadurch gekennzeichnet,**
**dass** bei einem Bremssystem mit einer hydraulischen Pumpe (16), die zum Erzeugen eines Bremsdruckes in den Radbremsen angesteuert wird, bei einem Abbruch der Bremsbereitschaftsfunktion die hydraulische Pumpe (16) wieder abgeschaltet wird.

3. Verfahren nach einem der Ansprüche 1 und 2,
**dadurch gekennzeichnet,**
**dass** eine Betätigung des Bremspedals (3) durch den Fahrer mittels eines Pedalwegsensors (4), festgestellt wird.

4. Verfahren nach einem der vorangegangenen Ansprüche,
**dadurch gekennzeichnet,**
**dass** eine Betätigung des Bremspedals (3) durch den Fahrer festgestellt wird, wenn sich der Bremsdruck bei aktivierter Bremsbereitschaftsfunktion um wenigstens einen vorgegebenen Schwellenwert erhöht.

5. Verfahren nach einem der vorangegangenen Ansprüche,
**dadurch gekennzeichnet,**
**dass** eine Betätigung des Bremspedals (3) durch den Fahrer festgestellt wird, wenn der Gradient des Bremsdrucks einen vorgegebenen Schwellenwert überschreitet.

## Claims

1. Method for controlling a vehicle brake system with a brake stand-by function in which suspicion of an emergency braking situation is determined and when a suspicion of an emergency braking situation is detected a brake pressure is generated in the vehicle brake system,
**characterized**
**in that** the brake stand-by function is aborted if the driver activates the brake pedal (3).

2. Method according to Claim 1,
**characterized**
**in that** in the case of a brake system with a hydraulic pump (16) which is actuated in order to generate a brake pressure in the wheel brakes, the hydraulic pump (16) is switched off again in the event of aborting the brake stand-by function.

3. Method according to one of Claims 1 and 2,
**characterized**
**in that** activation of the brake pedal (3) is detected by the driver by means of a pedal travel sensor (4).

4. Method according to one of the preceding claims,
**characterized**
**in that** activation of the brake pedal (3) by the driver is detected if the brake pressure increases by at least a predefined threshold value when the brake stand-by function is activated.

5. Method according to one of the preceding claims,
**characterized**
**in that** activation of the brake pedal (3) by the driver is detected if the gradient of the brake pressure exceeds a predefined threshold value.

## Revendications

1. Procédé de commande d'un équipement de freinage de véhicule comprenant une fonction de mise en réserve des freins, selon lequel une présomption de situation de freinage d'urgence est déterminée et, en cas de constatation d'une présomption de situation de freinage d'urgence, une pression de freinage est générée dans l'équipement de freinage de véhicule, **caractérisé en ce que** la fonction de mise en réserve des freins est interrompue lorsque le conducteur actionne la pédale de frein (3).

2. Procédé selon la revendication 1, **caractérisé en ce que** dans le cas d'un système de freinage muni d'une pompe hydraulique (16) qui est commandée pour générer une pression de freinage dans les freins des roues, la pompe hydraulique (16) est de nouveau désactivée lors d'une interruption de la fonction de mise en réserve des freins.

3. Procédé selon les revendications 1 et 2, **caractérisé en ce qu'**un actionnement de la pédale des freins (3) par le conducteur est déterminé au moyen d'un capteur de course de pédale (4).

4. Procédé selon l'une des revendications précédentes, **caractérisé en ce qu'**un actionnement de la pédale des freins (3) par le conducteur est déterminé lorsque la pression de freinage augmente d'au moins une valeur de seuil prédéfinie lorsque la fonction de mise en réserve des freins est activée.

5. Procédé selon l'une des revendications précédentes, **caractérisé en ce qu'**un actionnement de la pédale des freins (3) par le conducteur est déterminé lorsque le gradient de la pression de freinage dépasse une valeur de seuil prédéfinie.
